# EUROPEAN PATENT SPECIFICATION

(11) **EP 3 368 885 B1**
(45) Date of publication and mention of the grant of the patent: **03.06.2020**
(21) Application number: 16790939.9
(22) Date of filing: 28.10.2016
(51) Int. Cl.: G01N 21/35

(54) **METHODS AND SYSTEMS FOR ANALYZING THE QUALITY OF TISSUE FIXATION USING MID-INFRARED SPECTROSCOPY**
VERFAHREN UND SYSTEME ZUR ANALYSE VON DER QUALITÄT DER GEWEBEFIXIERUNG MITTELS MID-INFRAROTSPEKTROSKOPIE
PROCÉDÉS ET SYSTÈMES D'ANALYSE DE LA QUALITÉ DE FIXATION D'UN TISSU PAR SPECTROSCOPIE EN MOYEN INFRAROUGE

(30) Priority: 28.10.2015 US 201562247609 P
(43) Date of publication of application: 05.09.2018
(73) Proprietor: Ventana Medical Systems, Inc., Tucson, Arizona 85755 (US); F. Hoffmann-La Roche AG, 4070 Basel (CH); Roche Diagnostics GmbH, 68305 Mannheim (DE)
(72) Inventor: CHAFIN, David, Tucson, AZ 85755 (US); OTTER, Michael, Tucson, AZ 85737 (US); PETRICH, Wolfgang, 76669 Bad Schönborn (DE); BAUER, Daniel, Tucson, AZ 85718 (US); KROEGER-LUI, Niels, 67663 Kaiserslautern (DE)
(74) Representative: Richardt Patentanwälte PartG mbB
(86) International application number: PCT/EP2016/076130
(87) International publication number: WO 2017/072320

(56) References cited:
- EP-A1- 1 720 115
- WO-A1-2011/163624
- US-A1- 2012 176 487
- US-A1- 2012 270 293
- AIDAN D MEADE ET AL: "Studies of chemical fixation effects in human cell lines using Raman microspectroscopy", ANALYTICAL AND BIOANALYTICAL CHEMISTRY, SPRINGER, BERLIN, DE, vol. 396, no. 5, 20 January 2010 (2010-01-20), pages 1781-1791, XP019798742, ISSN: 1618-2650

## Description

### FIELD OF THE INVENTION

The present invention relates to use of mid-infrared (MIR) spectroscopy to assess the quality of tissue samples.

### BACKGROUND

Tissue thin sections are used in histology in order to obtain representative information about a tissue sample. The quality of the thin section should meet a number of characteristics in order to be properly representative of the overall tissue region where excision of the sample was performed. Although guidelines can vary according to tissue type and use, the size of the thin section generally should not be less than 2 µm. Typically, tissue sections are prepared in the range between 2 and 5 µm and should not vary in thickness by more than 50% over the lateral extent of the thin section in order to allow for appropriate further processing. Further factors that affect tissue section quality may include proper sample moisture and the temperature maintained during the sectioning process.

While some characteristics such as section size and thickness can be recognized immediately, others are usually identified only after the processing has begun, particularly, after fixation and staining. Once fixed little can be done to reverse any damage, and while it is possible to de-stain certain samples, precious stains such as expensive antibodies cannot be recovered. Therefore, it would be helpful to provide a method for the quality assessment of tissue thin sections prior to further processing.

If excised tissue samples *ex vivo* shall provide a decent representation of the tissue's biochemistry and morphology prior to excision (i.e. *in vivo*), its properties must be preserved immediately after excision in a process known as fixation. The main purpose of fixation is to maintain the microarchitecture of tissue, minimize the loss of cellular components, including peptides, proteins, lipids, mRNA, and DNA and to prevent the destruction of macromolecular structures such as cytoplasmic membranes [15]. Fixation prevents the short- and long term destruction of the microarchitecture by stopping enzyme activity and halting autolysis.

One of the standard methods for fixation of tissue samples is through treatment with an aqueous solution of formaldehyde, namely formalin. The preservation mechanism of formalin-based fixation is thought to originate from formaldehyde-induced cross-linking of proteins via methylene bridges. However, the complete mechanism of formalin fixation is not completely understood and numerous uncertainties and inconsistencies exist. Among the open questions that remain, for example, is how does formalin impact other tissue components such as nucleic acids?

Standards procedures have been developed that describe how to perform fixation in a reproducible, well-defined, and in the ideal case, also time-saving, manner (see e.g. [1]) in order to cope with the uncertainties. However, different laboratories often follow different fixation protocols. Moreover, there exists a large span of parameter that fit within specific protocols. For example, the most recent ASCO/CAP guideline for pre-analytical treatment of samples in the context of HER2 IHC testing, allows for fixation times between 6 hours and 72 hours [2] despite the unresolved dispute concerning the role of fixation times in HER2 testing (see e.g. [3-5]). Regardless of these issues, formalin fixation remains a very popular choice for the preservation of excised tissue.

Another biochemical approach to fixation is the use of agents that remove free water from tissues and hence precipitates and coagulates proteins. One example of such an approach involves the use of dehydration agent such as ethanol ("alcohol-only-fixative"), Removal and replacement of free water from tissue has several effects on proteins within the tissue, and may disrupt the tertiary structure of proteins [15]. Disruption of the tertiary structure of proteins (i.e., denaturation) changes the physical properties of proteins, mainly causing insolubility and loss of function. Even though most proteins become less soluble in these organic environments, up to 8% of protein is lost with ethanol only fixation vs 0% in formaldehyde based fixation.

Artifacts from alcohol-only-fixation or insufficient time in formalin can result in excessive tissue shrinkage, poorly defined cell margins, and inferior nuclear and cytoplasmic morphology [14, 15]. This is in contrast to proper formalin fixation which results in well-fixed tissue displaying good nuclear and cytoplasmic morphology with minimal shrinkage, and clearly showing defined basement membranes and cell margins. Alcohol-only-fixation can also influence the degree and specificity of staining of individual cell elements with various histochemical and immuno-histochemical reagents [13, 16].

Variations in the pre-analytical processing of tissue sample may also impact histological labelling & staining procedures, and may thus lead to inconclusive results. Early work of Piebani et al. (Clin. Chem. 1997; 42:1348-1351) stressed the high contribution (68%) of pre-analytical steps to the overall error rates in histopathology. There is, for example, an ongoing debate on the role of fixation in the lack of congruence in HER2 testing procedures and it was stated in 2007 that"...approximately 20% of current HER2 testing may be inaccurate." (Arch Pathol Lab Med 2007, 131:18-43).

From a clinical laboratory perspective, one option to conceptually address the uncertainties in pre-analytics may be offered by a quality check of the incoming sample prior to IHC. However, such quality check would advantageously leave any sample thin section unchanged, and in particular, unstained. Hence, reagent-free paths towards the quality control of histopathological thin sections have been sought, but to-date with only limited success.

The recent availability of tunable quantum cascade lasers provides a profound advancement in the field of Mid-infrared (MIR) spectroscopy-based histopathology [6-9] since it obviates some of the shortcomings of Fourier-Transform Infrared Spectroscopy (FT-IR) (for example, long acquisition times, high equipment costs, and the need for liquid nitrogen cooling). There are a number of prior investigations concerning the impact of the formalin-fixation and paraffin-embedding (FFPE) procedures on subsequent MIR spectroscopy. The results, however, have been inconclusive (see e.g. [10] and references therein) and only to the extent that the overall tissue preparation procedure for FFPE-treated samples was compared with untreated samples. If the consequences of the step of formaldehyde fixation on the secondary protein structures is considered in isolation the conclusion reached is that the "spectra of the fixed and unfixed proteins are virtually identical" [11]. Indeed, it has been stated that "[a]lthough it would be ideal to examine the secondary structure effects of formaldehyde fixation on proteins in their native tissues, in practice this is not possible. Since all tissues contain a number of different protein constituents, spectroscopic measurements on intact tissue can give data only on the 'average' protein present. Different proteins could respond to fixation in different ways, while yielding an unchanged "average." When investigating purified proteins the authors also state that "the spectra of fixed and unfixed proteins are virtually identical" [23].

WO 2011/163624 A1 describes a method for analyzing biological specimens by spectral imaging to provide a medical diagnosis. The method includes obtaining spectral and visual images of biological specimens and registering the images to detect cell abnormalities, pre-cancerous cells, and cancerous cells. This method eliminates the bias and unreliability of diagnoses that is inherent in standard histopathological and other spectral methods. In addition, a method for correcting confounding spectral contributions that are frequently observed in microscopically acquired infrared spectra of cells and tissue is described. The method includes performing a phase correction on the spectral data. This phase correction method may be used to correct various types of absorption spectra that are contaminated by reflective components.

US 2012/0270293 A1 describes a tissue sample preservation process and device for improving and standardizing tissue preservation procedure, including placing tissue specimens in a cold fixative, performing fixative penetration at a refrigerated temperature, and accelerating fixative penetration by ultrasound. Also described is the application of ultrasound and temperature control in the dehydration, clearing, and impregnation steps.

### SUMMARY

Surprisingly alterations of the MIR spectra actually can be observed in cellular samples and those alterations can be used for assessing the quality state of the cellular sample.

The present disclosure relates to an automated method of evaluating a quality state of a cellular sample by (a) identifying a quality signature in a mid-infrared spectroscopy (MIR) spectrum of the cellular sample (test spectrum); and (b) applying a classification and/or quantification algorithm to the quality signature in the test spectrum to determine the quality state of the cellular sample, wherein the cellular sample is a fixed cellular sample, the quality state is a fixation state and the quality signature is a fixation signature.

For example, a method of determining fixation quality of a fixed cellular sample is provided, said method comprising:
(a) identifying a fixation signature in a mid-infrared spectroscopy (MIR) spectrum of the fixed tissue sample (test spectrum); and
(b) correlating the fixation signature in the test spectrum to the fixation state of the fixed tissue sample.

Exemplary fixation signatures include: (1) a peak at a position between 1615 cm⁻¹ and 1640 cm⁻¹ in a second derivative spectrum; (2) a peak at a position between 1615 cm⁻¹ and 1640 cm⁻¹ in a principal component spectrum; (3) one or more peak amplitudes in the infrared spectrum and/or a derivative thereof; (4) multivariate signatures in the range from 800 cm⁻¹ to 1750 cm⁻¹ or a part or parts of this region, and combinations thereof. In some examples, the cellular sample is a tissue sample, such as tissue samples fixed with a cross-linking fixative. In a specific embodiment, the cross-linking fixative is an aldehyde, such as a formalin solution.

In some embodiments, the fixation signature in the test spectrum is correlated with the fixation state of the fixed tissue sample by determining whether a difference exists between the fixation signature in the test spectrum and a corresponding fixation signature in at least one reference MIR spectrum (reference spectrum). Examples of reference spectra include, but are not necessarily limited to, spectra correlating with an acceptably-fixed tissue sample, an under-fixed tissue sample, and/or an over-fixed tissue sample. For example, where the test spectrum is compared to a reference spectrum correlating with an acceptably-fixed tissue sample, a pronounced change in spectral signatures - such as amplitude and/or peak position between 1615 cm⁻¹ and 1640 cm⁻¹ in either a second derivative spectrum or a principal component spectrum - correlates with either under-fixation or over-fixation, depending on the direction of the shift. For example, a shift (in a second derivative spectrum) towards higher wavenumbers and/or decrease in amplitude (in a second derivative spectrum or a principal component analysis) may be indicative of increased fixation relative to the reference spectrum, while opposite shifts may be indicative of decreased fixation relative to the reference spectrum. Where a principal component analysis is used, the first principal component (PC1) (which carries the largest fraction of the overall variance) may be used alone or together with further principal components. Further uni- or multivariate analysis or combination of analysis schemes may be used. This information may then be used to determine whether or not to perform a subsequent analysis on the tissue sample, or whether a remedial tissue process (such as further fixation) should be performed. Molecular or tissue diagnostic tests can thus be reserved for tissue samples that are most likely to give diagnosable results, saving money on expensive diagnostic reagents, saving time by reducing the number of undiagnosable samples that are fully processed, and improving consistency of results by providing standards by which the quality of a fixation processes can be judged.

The results of the analysis may also be used for compensating for incomplete fixation, e g. by adjusting the image obtained from staining for local variations in the fixation known from the infrared imaging procedure.

### BRIEF DESCRIPTION OF THE DRAWINGS

The application file contains at least one drawing executed in color. Copies of this patent or patent application with color drawings will be provided by the Office upon request and payment of the necessary fee.
**Fig. 1** illustrates an exemplary system for performing the present analytical methods. Arrows illustrate data flows between components of the system. Dashed arrows indicate alternate pathways.
**Fig. 2** is a flow chart illustrating workflows involved in analyzing test spectra. Rectangles with curved corners are physical devices (or components thereof). Diamonds are software modules implemented by the hardware. Ovals are data packets input into and output from the system. Rectangles with angled corners are intermediate data generated from the input data and used to generate the output data. Arrows indicate data flows. Curved lines indicate computational steps.

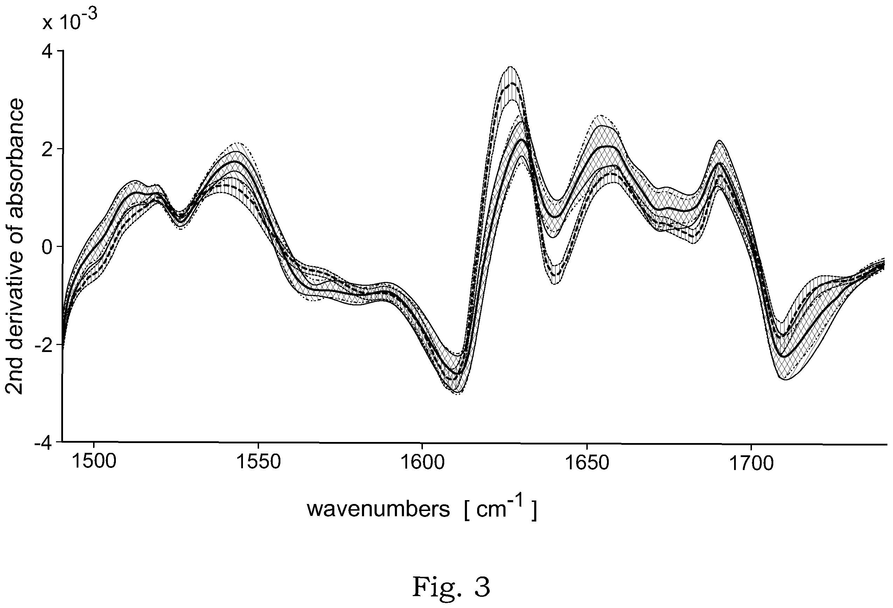

**Fig. 3** shows second derivative spectra in the Amide I and II bands, averaged over the tissue thin sections, whereby the tissue had been fixed for 0 (highest 2^{nd} derivative value of absorbance around 1625 cm⁻¹), 4 (middle at same wave-number), and 24 (lowest at same wave-number) hours. The solid lines mark the mean spectra and the shaded area denotes the standard deviations. In the shown experiment the mean spectra for 4h and 24h are almost identical and the "middle" and the "lowest" spectrum are almost not distinguishable. However, it is important to note that these spectra vastly differ from the 0h mean spectrum.
**Fig. 4** are micrographs demonstrating the changes in spectra across tissues sections in the 1615 cm⁻¹-1640 cm⁻¹ region overlaid with the visible light transmission microscope image of the unstained tissue thin section, wherein the duration of fixation was varied from 0 hours (top) through 4 hours (middle) to 24 hours (bottom)
**Fig. 5A** is a graph showing the results of 1^{st} principal component analysis and demonstrating that the largest pixel-to-pixel variability is around the 1625cm⁻¹
**Fig. 5B** is a graph showing that within an overall average of tissue thin sections PC1 alone provides a clear distinction between fixed (#: 24hours, *: 4 hours) and unfixed (+) samples, but that PC2 is also helpful in distinguishing the extent of fixation.
**Fig. 6A** is a micrograph showing the relative amplitude of principal component #1 (PC1) for unfixed tissue.
**Fig. 6B** is a micrograph showing the relative amplitude of principal component #1 (PC1) for tissue fixed for 4 hours.
**Fig. 6C** is a micrograph showing the relative amplitude of principal component #1 (PC1) for tissue fixed for 24 hours.
**Fig. 7** shows cluster center spectra as measured with a QCL-based microscope.
**Fig. 8A** is an image of the average slope in the range between 1050-1080cm⁻¹ for an unfixed sample
**Fig. 8B** is an image of the average slope in the range between 1050-1080cm⁻¹ for a fixed sample.
**Fig. 9A** illustrates the primary principal component from a principal component analysis of a tissue sample of a MCF7 xenograft fixed in formalin under conditions known to inadequately fix the tissue
**Fig 9B** is an H&E-stained image of a MCF7 xenograft fixed in formalin under conditions known to inadequately fix the tissue.

### DETAILED DESCRIPTION

The present methods and systems rely on evaluation of mid-infrared (MIR) spectra of cellular samples to determine a quality state of a sample. An MIR spectrum is obtained for a sample to be tested. This spectrum is compared to an MIR spectrum having a known quality state, either directly or using classification or quantification algorithms. Differences between portions of the spectra that predictably vary as the quality of the sample changes are compared, and those differences are analyzed to compute a score that can be correlated with the quality state of the sample.

### I. Abbreviations and Definitions

In order to facilitate review of the various examples of this disclosure, the following explanations of abbreviations and specific terms are provided:
**H&E:** Hematoxylin and eosin staining.
**FEPE:** Formalin-fixed, paraffin-embedded
**IHC**: Immunohistochemistry.
**ISH**: In situ hybridization.
**NBF**: neutral buffered formalin solution.
**IR:** Infrared
**MIR:** Mid-infrared
**FT-IR:** Fourier-Transform Infrared
**QCL**: Quantum Cascade Laser

As used herein, the term "cellular sample" refers to any sample containing intact cells, such as cell cultures, bodily fluid samples or surgical specimens taken for pathological, histological, or cytological interpretation. For example, the sample may be a bodily fluid sample, including but not limited to blood, bone marrow, saliva, sputum, throat washings, tears, urine, semen, and vaginal secretions or surgical specimen such as tumor or tissue biopsies or resections, or tissue removed for cytological examination.

As used herein, the term "tissue sample" shall refer to a cellular sample that preserves the cross-sectional spatial relationship between the cells as they existed within the subject from which the sample was obtained. "Tissue sample" shall encompass both primary tissue samples (i.e. cells and tissues produced by the subject) and xenografts (i.e. foreign cellular samples implanted into a subject).

As used herein, the term "cytological sample" refers to a cellular sample in which the cells of the sample have been partially or completely disaggregated, such that the sample no longer reflects the spatial relationship of the cells as they existed in the subject from which the cellular sample was obtained. Examples of cytological samples include tissue scrapings (such as a cervical scraping), fine needle aspirates, samples obtained by lavage of a subject, *et cetera.*

As used herein, a "quality state" refers to the degree to which a cellular sample possesses characteristics that make the cellular sample suitable for a particular end use. In the invention, the quality state is a fixation state, such as the extent and/or uniformity of fixation. Other quality states not covered by the claims may be sample size; tissue integrity, such as extent of ruptured cells or necrosis; morphological integrity, such as presence or absence of torn apart or stretched tissues, such that cell shapes are changed; average size of cells, which could, for example, indicate unacceptably altered pH or salt concentration; degree of thawing of cryopreserved sample, *et cetera.* This list is not exhaustive, and many other examples of potential applications may be immediately apparent to a skilled practitioner.

As used herein, the term "test sample" refers to a sample for which the quality state is to be determined.

As used herein, the term "reference sample" refers to a sample against which the test sample is compared.

As used herein, a "quality signature" is a particular feature within a spectrum or as derived from a spectrum by mathematical means that predictably varies with a change in one or more features of the cellular sample that is indicative of a quality characteristic of the sample. The quality characteristic of a cellular sample is fixation status. In this context, a "fixation signature" is a particular feature within a spectrum or as derived from a spectrum by mathematical means that predictably varies with a change in fixation status. A fixation signature may be one or more changes in peak amplitude and/or peak position, one or more changes in the slope (first derivative) of the spectrum or the curvature (second derivative) of the spectrum. Examples for spectral features derived from the spectrum are peak ratios, sums of spectral values (such as the integral over a certain spectral range), principal components, loadings, scores, cluster membership, a special region of the spectrum which is e.g. selected by Fisher's criterion, Gini-importance, Kolmogorov-Smirnov testing, Short-Time Fourier Transform (STFT), wavelet transforms, and the like.

As used herein, the term "confidence threshold" refers to a minimally acceptable likelihood that a given quality signature is derived from a sample having a given quality state.

As used herein, the term "spectrum" refers to information (absorption, transmission, reflection) obtained "at" or within a certain wavelength or wavenumber range of electromagnetic radiation. A wavenumber range can be as large as 4000 cm⁻¹ or as narrow as 0.01 cm⁻¹. Note that a measurement at a so-called "single laser wavelength" will typically cover a small spectral range (e.g., the laser linewidth) and will hence be included whenever the term "spectrum" is used throughout this manuscript. A transmission measurement at a fixed wavelength setting of a quantum cascade laser, for example, shall hereby fall under the term spectrum throughout this application.

As used herein, the term "fixation" refers to a process by which molecular and/or morphological details of a cellular sample are preserved. There are generally three kinds of fixation processes: (1) heat fixation, (2) perfusion; and (3) immersion. With heat fixation, samples are exposed to a heat source for a sufficient period of time to heat kill and adhere the sample to the slide. Perfusion involves use of the vascular system to distribute a chemical fixative throughout a whole organ or a whole organism. Immersion involves immersing a sample in a volume of a chemical fixative and allowing the fixative to diffuse throughout the sample. Chemical fixation involves diffusion or perfusion of a chemical throughout the cellular samples, where the fixative reagent causes a reaction that preserves structures (both chemically and structurally) as close to that of living cellular sample as possible. Chemical fixatives can be classified into two broad classes based on mode of action: cross-linking fixatives and non-cross-linking fixatives. Cross-linking fixatives - typically aldehydes - create covalent chemical bonds between endogenous biological molecules, such as proteins and nucleic acids, present in the tissue sample. Formaldehyde is the most commonly used cross-linking fixative in histology. Formaldehyde may be used in various concentrations for fixation, but it primarily is used as 10% neutral buffered formalin (NBF), which is about 3.7% formaldehyde in an aqueous phosphate buffered saline solution. Paraformaldehyde is a polymerized form of formaldehyde, which depolymerizes to provide formalin when heated. Glutaraldehyde operates in similar manner as formaldehyde, but is a larger molecule having a slower rate of diffusion across membranes. Glutaraldehyde fixation provides a more rigid or tightly linked fixed product, causes rapid and irreversible changes, fixes quickly and well at 4 °C, provides good overall cytoplasmic and nuclear detail, but is not ideal for immunohistochemistry staining. Some fixation protocols use a combination of formaldehyde and glutaraldehyde. Glyoxal and acrolein are less commonly used aldehydes. Denaturation fixatives - typically alcohols or acetone - act by displacing water in the cellular sample, which destabilizes hydrophobic and hydrogen bonding within proteins. This causes otherwise water-soluble proteins to become water insoluble and precipitate, which is largely irreversible.

As used herein, "fixation state" refers to the degree to which a fixation process, or a component thereof, has been allowed to proceed. For example, "fixation state" may refer to the completeness of the fixation reaction. In this case, for cross-linking fixatives, "fixation state" refers to the extent of cross-linking that has been allowed to proceed within the sample. Likewise in this case, for denaturing fixatives, "fixation state" refers to the extent to which proteins within the sample have been denatured relative to at least one reference sample. In another example, the "fixation state" may refer to the extent and/or homogeneity to which the fixative has been allowed to penetrate into a tissue sample (such as by diffusion or perfusion).

As used herein, the term "acceptably-fixed tissue sample" refers to a fixed tissue sample in which sufficient molecular and/or morphological detail has been preserved to enable a histological or histochemical diagnosis of a pathological condition by a trained pathologist. In one example in which morphological preservation is important for diagnosability, a acceptably-fixed tissue sample is a fixed tissue sample having sufficient morphological detail preserved (as determined by an H&E stain) that a trained pathologist would consider the tissue sample to be diagnosable. In an example in which histochemical analysis of a specific analyte is important for diagnosability (such as the presence or amount of a particular protein or nucleic acid sequence), an acceptably-fixed tissue sample is a fixed tissue sample in which the analyte is detectable.

As used herein, the term "under-fixed" refers to a sample in which insufficient fixation has occurred. One example of under-fixation occurs when the fixative has not been allowed to adequately diffuse throughout the tissue sample. In such a case, the outer portion of the tissue sample may be adequately preserved, but morphological and/or molecular details of the inner portion of the tissue sample may be lost over time. The result could be non-uniform staining patterns within the tissue, where the outer portion of the tissue sample stains more strongly for the marker or analyte being detected than the inner portion of the tissue sample. In another example, the fixation reaction may not be allowed to proceed for a sufficient period of time to completely preserve the molecular and/or morphological details of the tissue sample.

As used herein, the term "over-fixed" refers to a tissue sample in which the fixation process obscures or inappropriately alters the morphological and/or molecular details of the sample. One example of over-fixation involves an antibody being rendered incapable of binding to its target.

### II. Systems for identification and analysis of quality signatures

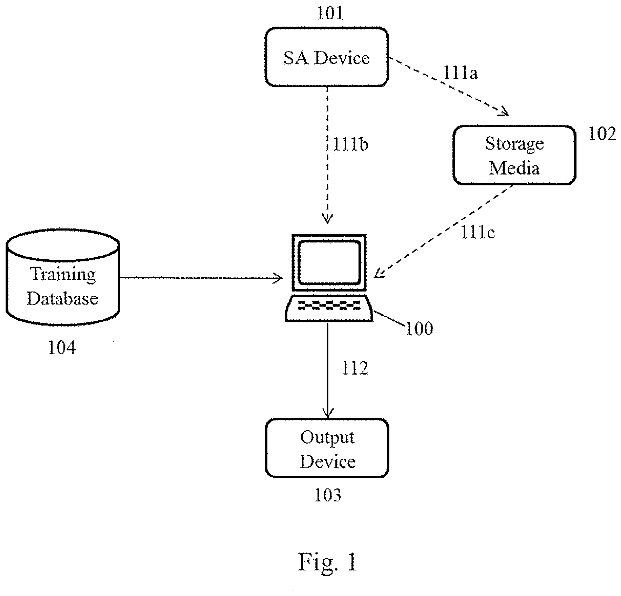

An exemplary system for performing the present analytical methods is illustrated at Fig. 1.

### A. Spectral Analysis System

A spectral analysis system **100** is included comprising a memory coupled to a processor, the memory to store computer-executable instructions that, when executed by the processor, cause the processor to perform operations. The term "processor" encompasses all kinds of apparatus, devices, and machines for processing data, including by way of example a programmable microprocessor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus also can include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification optionally can be implemented on a computer having a display device, e.g., an LCD (liquid crystal display), LED (light emitting diode) display, or OLED (organic light emitting diode) display, for displaying information to the user and a keyboard and a pointing device, e.g., a mouse or a trackball, by which the user can provide input to the computer. In some implementations, a touch screen can be used to display information and receive input from a user. Other kinds of devices can be used to provide for interaction with a user as well; for example, feedback provided to the user can be in any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The spectral analysis system optionally can include any number of clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

### B. Spectral Acquisition (SA) Device

A spectral acquisition (SA) device **101** may be included in the systems, which is configured to obtain a MIR spectrum of the cellular sample (or a portion thereof). The acquisition device **101** may then communicate the spectral data to a non-transitory computer readable storage device **102, 111a** to store data corresponding to the acquired MIR spectrum. The storage device **102** may be an integral with the acquisition device **101,** or may be external to the acquisition device **101,** for example, by being an integral part of the spectral analysis system **100** or a stand-alone device (such as an external hard drive, a server, database, etc.). The storage device is preferably configured to transmit the data to the spectral analysis device **100.** Additionally or alternatively, the acquisition device **101** may communicate data corresponding to the acquired spectrum directly to the processor for analysis **111b**. A network or a direct connection may interconnect the spectral analysis device **100** and/or the SA device **101** and/or the storage media **102.**

Devices useful for MIR analysis of cellular samples is well established in the art and would be well understood by the ordinarily skilled practitioner. Any method suitable for generating a representative MIR spectrum for the samples can be used. Fourier-transform Infrared Spectroscopy and its biomedical applications are discussed in, for example, in P. Lasch, J. Kneipp (Eds.) Biomedical Vibrational Spectroscopy" 2008 (John Wiley&Sons). More recently, however, tunable quantum cascade lasers have enabled the rapid spectroscopy and microscopy of biomedical specimen (see N. Kröger et al., in: Biomedical Vibrational Spectroscopy VI: Advances in Research and Industry, edited by A. Mahadevan-Jansen, W. Petrich, Proc. of SPIE Vol. 8939, 89390Z; N. Kröger et al.,J. Biomed. Opt. 19 (2014) 111607; N. Kröger-Lui et al., Analyst 140 (2015) 2086) by virtue of their high spectral power density. This work constitutes a major breakthrough (as compared to foregoing Infrared microscopy setups) towards applicability in that the investigation is much faster (e.g. 5 minutes instead of 18 hours), does not need liquid nitrogen cooling and provides more many more pixels per image at substantially lower cost. One particular advantage of QCL-based microscopy in the context of the quality assessment of unstained tissue is the larger field of view (as compared to FT-IR imaging) which is enabled by the microbolometer array detector with e.g. 640 x 480 pixels.

Spectra may be obtained over broad wavelength ranges, one or more narrow wavelength ranges, or even at merely a single wavelength, or a combination thereof. Narrowing down the spectral range is usually advantageous in terms of the acquisition speed, especially when using quantum cascade lasers. In one particular embodiment, a single tunable laser is tuned to the respective wavelengths one after the other. Alternatively, a set of non-tunable lasers at fixed frequency could be used such that the wavelength selection is done by switching on and off whichever laser is needed for a measurement at a particular frequency. In an aspect, the particular wavelength or wavelengths of the laser or lasers used should selected to at least encompass the wavelength range at which the quality signatures are found.

The spectra may be acquired using, for example, transmission or reflection measurements. For transmission measurements, barium fluorite, calcium fluoride, silicon, thin polymer films, or zinc selenide are usually used as substrate. For the reflection measurements, gold- or silver-plated substrates are common as well as standard microscope glass slides, or glass slides which are coated with an MIR-reflection coating (e.g. multilayer dielectric coating or thin sliver-coating). In addition, means for using surface enhancement (e.g. SEIRS) may be implemented such as structured surfaces like nanoantennas.

### C. Output Device

An output device **103** may be included in the systems, which is configured to obtain classification results from the spectral analysis system **100** and then perform a function based, at least in part, on the classification results. For example, the output device may be a device for displaying the results of the classification, such as a display device, (e.g., an LCD (liquid crystal display), LED (light emitting diode) display, or OLED (organic light emitting diode) display), a printer, etc. As another example, the output device may be a part of an automated workflow for processing the cellular sample for subsequent analysis, in which case the classification results may be used to determine whether a sample may proceed along an automated processing path, or which processing path the sample may proceed along. For example, one could envision a situation in which the present methods and analyses are a part of an automated tissue processing workflow for preparing FFPE tissue samples for staining. The spectral analysis may be performed on an FFPE sample before or after dewaxing to determine if the sample has been properly fixed and, if not, an automated process is implemented to either return the sample for remedial tissue processing or to reject the tissue sample from further analysis. In this way, valuable (and potentially expensive) resources can be reserved for samples that have the highest likelihood of giving useful information. As another example, the output device may be a non-transitory computer readable medium for storing the results of the classification.

### D. System Workflow

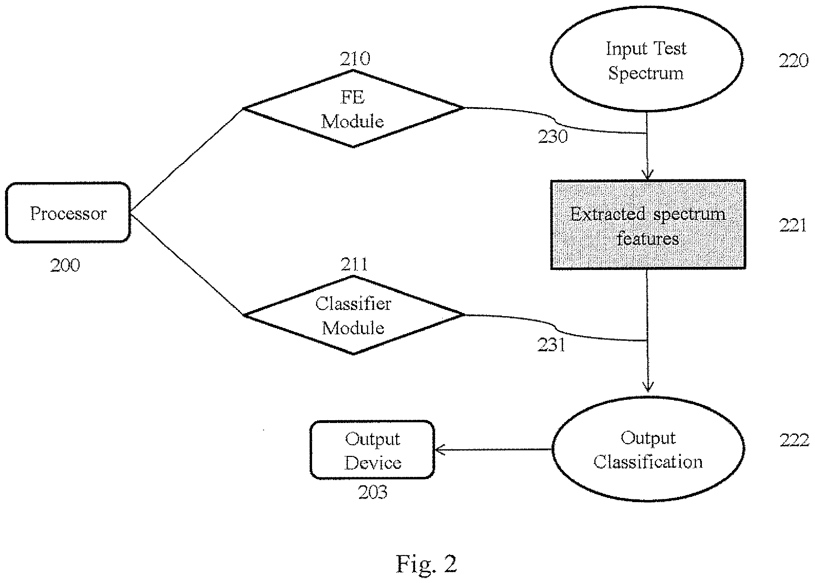

In operation, data associated with the acquired test spectrum is communicated to the spectral analysis system **100** from the SA device **101, 111b** or the storage medium **102, 111c**. The spectral analysis system **100** then evaluates the data to identify quality signatures within the test spectrum and to classify the test spectrum on the basis of this analysis. This process is illustrated at Fig. 2. Data associated with the test spectrum **220** is input into the spectral analysis system. A processor of the spectral analysis system **200** then implements a feature extraction (FE) module **210** to extract features of the test spectrum relevant to the quality signature being evaluated **230.** A processor of the spectral analysis system **200** (which may be the same or different processor from the processor executing the FE module) then implements a classifier module **211** on the features extracted from the test spectrum **220.** The classifier module **211** applies a classification (which may be supervised or unsupervised) and/or quantification algorithm **231** to the extracted features **221,** the output of which is a probability of the test spectrum being indicative of a particular quality state. The results of the classification are then output to the output device **203.**

In an embodiment, an unsupervised classification algorithm is used by the classifier. The concept of unsupervised classification (e.g. cluster analysis, principal component analysis, k-nearest neighbour, etc.) is implemented by naivly searching for major differences among the spectra, without any *a priori* information about the quality of the sample. In such an example, the algorithm is first trained on a plurality of spectra to generate a plurality of clusters spectra having similar features. Each cluster is then evaluated to determine whether the cluster correlates with a particular quality state. The trained algorithm is then applied to test spectrum, and the algorithm assigns the test spectrum to one of the clusters.

In another embodiment, a supervised classification algorithm is used by the classifier. In a supervised classification algorithm, information regarding each training spectrum and its respective sample quality property is input into the system, and the algorithm "learns" (e.g .by artificial neural network, support vector machine, discriminant analysis etc.) which metrics correlate with class membership. After this training, the trained algorithm is applied to a test spectrum, and the test spectrum is classified on the basis of metrics identified during the training process.

In another embodiment, a quantification algorithm is used by the classifier. In contrast to supervised and unsupervised classification algorithms, (which essentially aim at classification into one of a finite number of bins), a quantification algorithm aims at correlating the spectra to a continuum, often by a regression analysis. In one embodiment, the quantification algorithm is a principal component regression. In another embodiment, the quantification algorithm is a partial least square regression.

### E. Training Database

In certain embodiments in which a trained classification algorithm is applied to the test spectrum, a training database **104** may be included. The training database **103** includes a plurality of spectral signatures annotated on the basis of the particular quality state of similar cellular samples (training spectra). The spectral analysis system **100** accesses the training database **104** when the trained classifier is being trained. By evaluating training spectra associated with known quality states, the classification algorithm can be trained to identify particular features within the spectra that signify membership in a particular quality state. The training classification algorithm may be trained once, in which case the training database **104** need not be permanently accessible by the spectral analysis system. Alternatively, the training database may be continuously updated, so that the training classifier may be continuously refined as additional training spectra become available. In this case, the training database may be permanently connected to the system, or have open access to the system. A network or a direct connection may interconnect the training database **104** and the spectral analysis device **100.** In the simple case of fixed laser frequency the training can be as simple as deriving the transmission amplitude range for "good quality" versus "bad quality" of the sample at the given wavelength.

### III. Fixation analysis

One exemplary embodiment of a quality state that would be useful to assay using the present systems and methods is fixation state. Before samples can be analyzed to determine fixation state, fixation signatures must be identified. This is accomplished by generating MIR spectra of more than one sample at varying states of fixation. The spectra can then be evaluated for variations between the different samples in, for example, peaks at specific wavelengths in a second derivative spectrum or principal component amplitudes.

### A. Samples

For identifying candidate fixation signatures, a variety of different fixed samples should be generated that provide a representative sampling of both the desired fixation state and undesired fixation state or states. In each case, the precise fixation state will depend on the analyte or feature of the sample being analyzed.

In some cases, standard fixation processes have already been identified. For example, for breast tissue on which receptor tyrosine-protein kinase erbB-2 (HER2), estrogen receptor (ER), and progesterone receptor (PR) expression is to be tested immunohistochemically or via *in situ* hybridization, the American Society of Clinical Oncologists and the College of American Oncologists suggest fixing the samples in room temperature 10% neutral buffered formalin (NBF) for between 6 hours and 48 hours. In such a case, it would be useful to know whether the standard fixation process has been followed. Thus, the critical variables of the fixation process (e.g., time, temperature, reagent concentration, etc.) can be varied to include time points and/or conditions that fall within the standard fixation process and fall outside the standard fixation process. Components of the MIR spectrum that vary in a predictable way between the different fixation times and/or conditions are then selected as candidate fixation signatures.

In other cases, it may be useful to determine whether a fixation process has been allowed to proceed for an appropriate amount of time. If the reaction is not permitted to proceed to a sufficient extent, the samples could be under-fixed, which may lead to degradation target analytes within the sample, loss of morphology, and reduced specific immunoreactivity. If the reaction is permitted to proceed too long, on the other hand, the samples could be over-fixed, which may lead to masking of target proteins, loss of nucleic acids, and/or strong nonspecific background binding of antibodies. In this case, a time course can be set-up, encompassing time points that result in acceptably fixed samples and at least one of under-fixed samples and/or over-fixed samples. Components of the MIR spectrum that vary in a predictable way between the different fixation states are then selected as candidate fixation signatures.

In other cases, it may be useful to determine whether a fixative has been allowed to adequately diffuse into the sample. In the case of cross-linking fixatives, inadequate diffusion is often caused by allowing the temperature of fixative to rise too high during initial stages of the fixation process. Excessive cross-linking occurs in the outer regions of the samples, which prevents the fixative from diffusing further into the sample. The result is often gradient staining, wherein molecular or morphological detail is preserved at the outer edges, but lost in the interior, which could lead to misdiagnosis. In this case, samples can be fixed while actively monitoring diffusion of the fixative, such as by the process described in US 2012-0329088 A1. Diffusion can be stopped at various points (e.g. by removing the sample from fixative at various time points and/or increasing the temperature to induce fixation). MIR spectra are then taken from at least the inner portion of the sample. Components of the MIR spectrum that vary in a predictable way between the different diffusion states are then selected as candidate fixation signatures. Optionally, MIR spectra may additionally be taken from the edge regions of the samples. Comparison between the MIR spectra of the edge region and the inner portion may also reveal candidate fixation signatures or be useful for confirming candidate fixation signatures.

The MIR spectra may be taken before or after dewaxing in the case of paraffin-embedded samples or from frozen or thawed samples in the case of cryogenically frozen samples.

### B. Correlating fixation signatures with fixation state

Once candidate fixation signatures are identified, variation in the fixation signature is correlated with a particular fixation state of the sample. In a general sense, the relation involves calculating a likelihood that the sample fits within a particular category of fixation state and/or calculating a number for the degree of fixation.

In one embodiment, the correlation may be made on the basis of one or more reference spectra. For example, one could select a particular statistic of a spectrum that has a high likelihood of correlating with a single fixation state as the reference spectrum. Additional analyzed spectra can then be compared to the reference spectrum for deviations in the fixation signature, and those deviations can be correlated back to how well the analyzed sample fits within the fixation state of the reference spectrum. The process is continued with different samples until a confidence threshold can be defined, wherein samples having a fixation signature falling closer to the fixation signature of reference spectrum than the confidence threshold are considered to have the same fixation state as the sample having the reference spectrum, and vice versa.

There are numerous ways how spectral signatures can be identified and used. The methods may be uni- or multivariate. Usually, the approaches are categorized in supervised and unsupervised methods. Without limiting the generality of the approach, the ways include cluster analysis, principal component analysis, regression methods like principal component regression or partial least square regression, linear or quadratic discriminant analysis, artificial neural networks, support vector machines and the like. In the case of fixed laser frequency, the evaluation method will most frequently be a univariate method. An example for a spectral signature could be the transmission amplitude at that given laser frequency in this case. In the case of two fixed laser frequencies, simple multivariate means could be the combination of reflection and/or transmission amplitudes at these two laser frequencies as well as the sum, difference, ratio, product thereof or combinations of e.g. the difference and ratio. One frequent example in this case is to calculate the difference between the two peak amplitudes and divide this difference by the sum of the two amplitudes, such that a "relative difference" is derived.

For one or more fixed laser frequency data points or for a scanned spectrum, quantification algorithms include, for instance, particle least square regression or principal component regression. Without limiting generality, a quantification algorithm could for instance aim at quantifying the stat of fixation on the scale from 0% to 100%.

It is of note that a classification or quantification algorithm may be chosen to be specific for a certain tissue type and/or sample acquisition and preprocessing mode. For example, a classification algorithm for distinguishing between "sufficiently fixed" and "insufficiently fixed" samples may be generated for paraffin-embedded breast tissue samples and another classifier of the same goal may be generated for frozen liver tissue samples.

In a general setting, these classifiers may be even combined and/or ordered. In one embodiment, a decision tree, for example, may constitute an example of combining different classification schemes for the same quality criterion (e.g. degree of fixation). In another embodiment, additional information about the sample may be considered in the classification and/or enumeration procedure. If, for example, a bar code is measured on the same sample slide, data about the type of tissue may be provided to the algorithm from a data base and enter into the algorithm.

If desired, the correlation can be validated on a set of samples in which the fixation state is unknown by evaluating the candidate fixation signal for each sample and then testing the samples for the analyte or sample feature being analyzed. If the candidate fixation signal is valid, one should be able to predict the quality of the analyte or sample feature analysis (and thus fixation state) based on the candidate fixation signal.

### C. Analysis of test spectra

Once an appropriate fixation signature has been identified and a procedure (e.g. an evaluation algorithm) has been defined, samples are ready to be tested. MIR spectra are collected for the sample.

In some embodiments, the spectra can be collected from the entire sample, for example, by collecting spectra from overlapping regions of the sample with a pre-determined size. The fixation signal may then be extracted from each collected spectrum, a composite spectrum may be generated, and the correlation may be applied to the composite spectrum. This is useful where a single fixation state is to be assigned to the entire sample. Additionally or alternatively, a "map" of the extracted fixation signatures may be overlaid over an image of the sample to provide a graphical representation of the fixation state over the entire sample. This is particularly useful where it would be helpful to ensure consistent fixation state throughout the entire sample.

In some embodiments, the MIR spectra can be collected only from a portion of the sample. This can be useful where one wants to save on computing power necessary to analyze the collected spectra. In such a case, the spectrometer may be programmed to collect the MIR spectra from a predefined proportion of the sample, for example by random sampling or by sampling at regular intervals across a grid covering the entire sample. This can also be useful where only specific regions of the sample are relevant for analysis. In such a case, the spectrometer may be programmed to collect the MIR spectra from a predefined proportion of the region or regions of interest, for example by random sampling of the region or by sampling at regular intervals across a grid covering the entire region. This is particularly useful where the fixation state is a degree of fixative diffusion within the sample.

In one particular embodiment, the image may be taken along lines of the sample or in forms of a grid in order to cover the overall extend of the sample. It may be useful, to search for a gradient of the degree of fixation and to include this gradient information in the statement of the tissue quality.

In some embodiments, the spectra may be taken over one or more narrow ranges of wavenumber. A quantum cascade laser could, for example, be operated at a single wavelength and that spectrum (which here means the spectral information at this wavelength, see definition above) is evaluated over the whole image with respect to tissue quality.

In another embodiment, two or more spectra are taken at appropriately chosen, fixed wavelengths of two or more quantum cascade lasers. The ratio or difference (or both) between, for example, the absorbance values at these two wavelengths can readily be calculated and used for assessing the state of fixation.

In another embodiment, a quantum cascade laser is continuously tuned over a spectral feature, e.g. an absorption peak. In a special form of this embodiment, the laser is tuned with a sinusoidal time-dependence with a period of duration dt (e.g. 0.1 second), such that the image spectra are modulated at f=1/dt (e.g. 10 Hz). A corresponding filtering of the image series such as a high-pass filtering of the image series with a cutoff shortly below f then allows for a differential evaluation at lower background noise.

In another embodiment, a multiline emission QCL may be used to generate two or more wavelength and the time sequence of the laser illumination of the sample can be controlled by the laser current or modulated using a chopper wheel.

In another embodiment, two or more lasers may, on average, illuminate the sample simultaneously while the laser light power at the location of the sample is modulated at two or more frequencies. This approach basically constitutes a lock-in technique for each single pixel signal, from which the signal can be derived in relation to the specific laser based on the individual laser's modulation frequency (or harmonics thereof).

If so desired, this information can be used to make decisions regarding whether and how to further process the tissue sample. For example, where the fixation signature indicates that the tissue sample has been under-fixed or has not been sufficiently diffused or perfused with fixative for a particular analysis, rejection of the sample for analysis or further exposure of fixative can be performed.

### IV. Examples

A total of 9 tonsil thin sections were available, for which the overall FFPE process was kept constant with the exception of different fixation times/methods only:
- 3 thin sections of an unfixed sample (alcohol-only-fixation): Human tonsil samples sliced to 4mm thick were placed directly into 70% ethanol, the first reagent of most automated tissue processors. These samples were then dehydrated, cleared and impregnated with wax in a standard overnight cycle on an automated tissue processor.
- 3 sections of a sample that underwent 4 hours of fixation (partially fixed): Human tonsil samples sliced to 4mm thick were placed into 10% Neutral buffered formalin at room temperature (21 degrees Celsius) for 4 hours. These samples were then dehydrated, cleared and impregnated with wax in a standard overnight cycle on an automated tissue processor.
- 3 sections of a sample that underwent 24 hours of fixation at RT: Human tonsil samples sliced to 4mm thick were placed into 10% Neutral buffered formalin at room temperature (21 degrees Celsius) for 24 hours. These samples were then dehydrated, cleared and impregnated with wax in a standard overnight cycle on an automated tissue processor.

For the purpose of comparison, 3 sections from a similar sample were available for which we followed the Cold/Hot fixation protocol as described in Ref. [1]. More precisely, for this protocol we used samples which were exposed to formaldehyde with variations of the Cold/Hot protocol: 2 hrs at 4°C followed by 2hr at 45°C, 3 hr at 4°C followed by 1 hr at 45°C, and 5 hr at 4°C followed by 1 hr at 45°C.

FT-IR microspectroscopy was performed using a Bruker Hyperion 1000 (Bruker Optics, Ettlingen, Germany) together with a Tensor 27 in the wavenumber range 600-6000cm-1, corresponding to 16.7µm ... 1.67µm. A liquid-nitrogen cooled MCT detector (InfraRed D326-025-M) was used. The spectral resolution was 4 cm-1. Tissue sections were mapped over an area of 60 x 60 steps using a 36x Cassegrain objective (NA: 0.5). A 3.75 µm aperture was introduced into the microscope. The step width was 50 µm. For each pixel's spectrum, 25 forward/backward interferometer scans were collected. Blackman-Harris 3-term apodization was performed prior to background correction and vector normalization. Second derivatives were calculated using Savitzky-Golay filtering. The total acquisition time per thin section amounted to 18 hours.

The second derivative spectrum of samples fixed for 0, 4, and 24 hours are shown in Fig. 3. The wavenumber range displayed in Fig. 3 covers the Amide-I and Amide-II bands which are attributed to molecular vibrations in proteins and peptides. No pronounced differences are found around wavenumbers of 1746 cm⁻¹ and 1500 cm⁻¹, which are known absorption peaks of (gaseous) formaldehyde caused by the C=O stretching and CH₂ scissor vibrations, respectively. This finding agrees well with prior findings from C¹³-NMR spectroscopy [12] showing that formaldehyde in water is hydrated to more than 99.5%, forming methylene glycol.

On the contrary, significant spectral differences are evident at 1625 cm⁻¹, which are presumably related to changes in content of proteins. Significant variations are also found at 1640 cm⁻¹ which is indicative for changes in unordered structures of the polypeptide backbone.

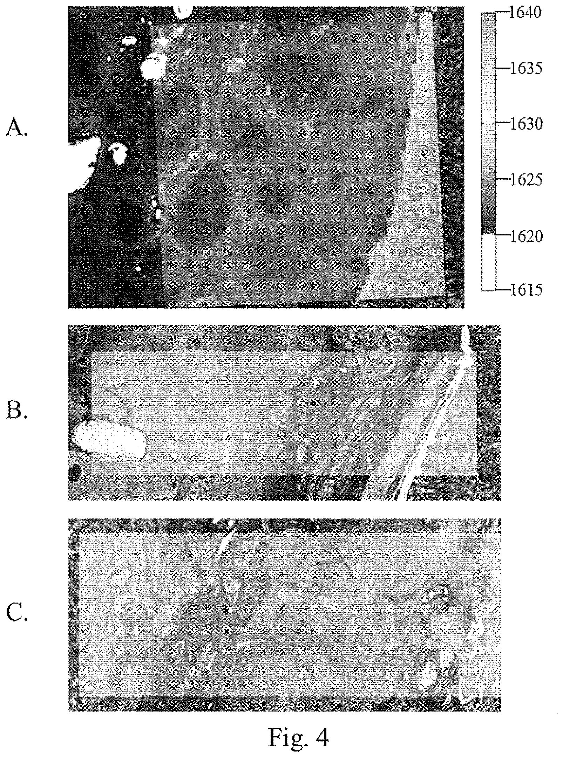

A detailed look onto the peak around 1625 cm⁻¹ reveals both, a change in amplitude and a shift in peak position. In a first analysis we used the peak position to investigate the impact of fixation onto the MIR images (Figs. 4A-unfixed, 4B-4 hours of fixation and 4C-24 hours of fixation). A clear distinction between fixed and unfixed tissue may thus be obtained by merely measuring the peak position between 1615 cm⁻¹ and 1640 cm⁻¹.

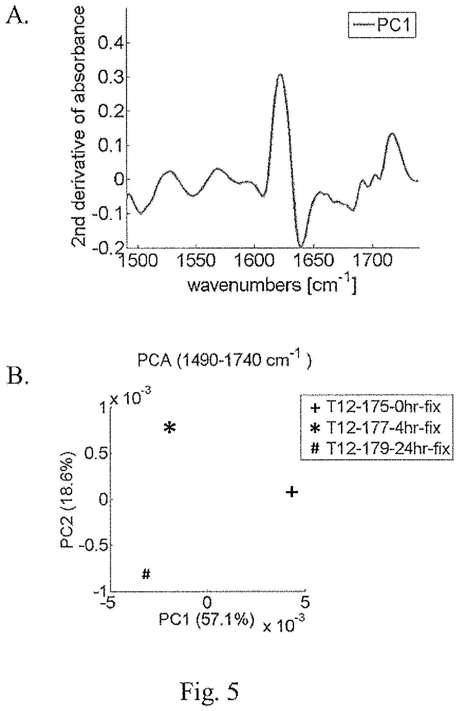

While a further investigation along these lines, e.g. by using the amplitude and/or position of this peak, may be elucidating, we directly moved to well-known multivariate data analysis procedures. Among these is principal component analysis, in which the individual pixel spectra are rearranged to represent spectral pixel-to-pixel variation (in decreasing order). The first principal component (PC) provides the spectral dependence of the most varying component, the second PC of the second-most varying component and so forth. If the full spectral information between 1490cm⁻¹ and 1740cm⁻¹ is exploited in forms of the principal component analysis (PCA) of all three spectral images together, the first PC indeed shows that the spectral shift and amplitude change around 1625cm⁻¹ gives rise to the largest spectral pixel-to-pixel variations (Fig. 5A). The result of PCA is represented by deconvoluting a pixel's spectrum into a weighted sum of PCs and by plotting the weight of PC1 versus the weight of PC2. Such an illustration is given in Fig. 5B for the average spectra of each of the three samples.

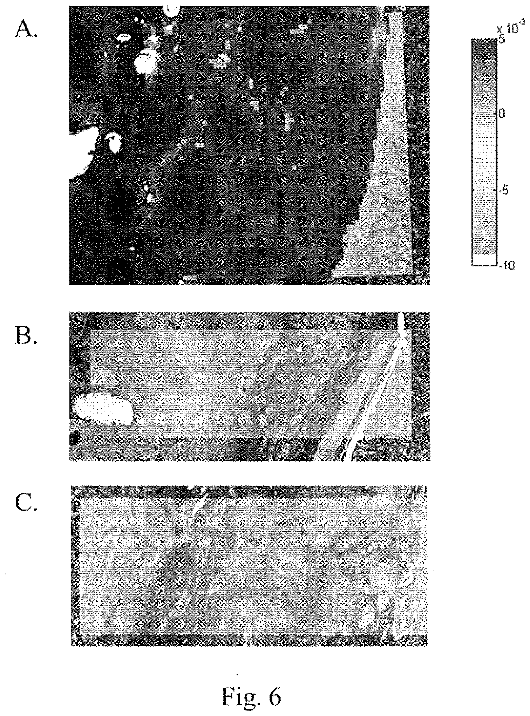

In turn, PC1 may be used to display the degree of fixation among and even within unstained tissue thin sections (Fig. 6A-unfixed, 6B-4 hours of fixation, and 6C-24 hours of fixation). In addition, PC1 may facilitate distinction between alcohol-only-fixation vs. formalin fixation. These images indicate that - in this example - information about the fixation can be obtained in unstained, paraffin-embedded tissue thin sections. Further uni- or multivariate methods including morphological image analysis may lead to even better results.

Both degree of fixation and detection of alcohol-only-fixation are important considerations for the interpretation of tissue morphology and immunoreactivity which may be compromised.

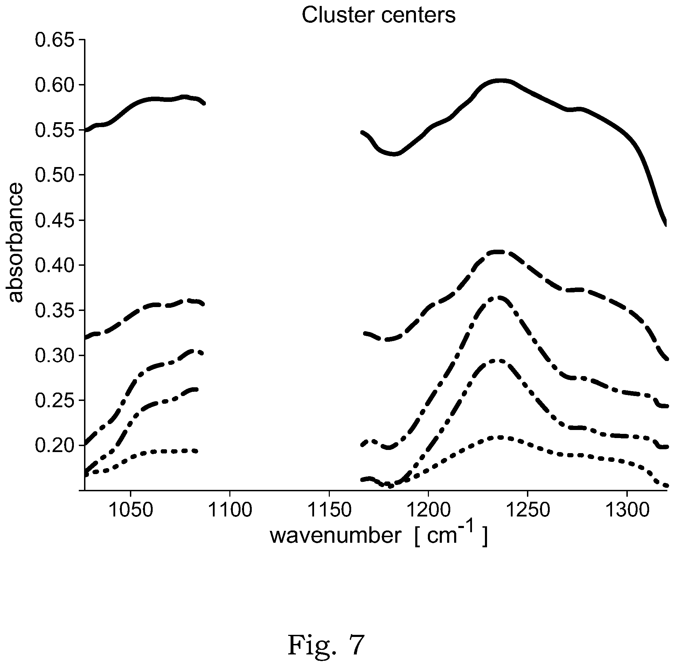

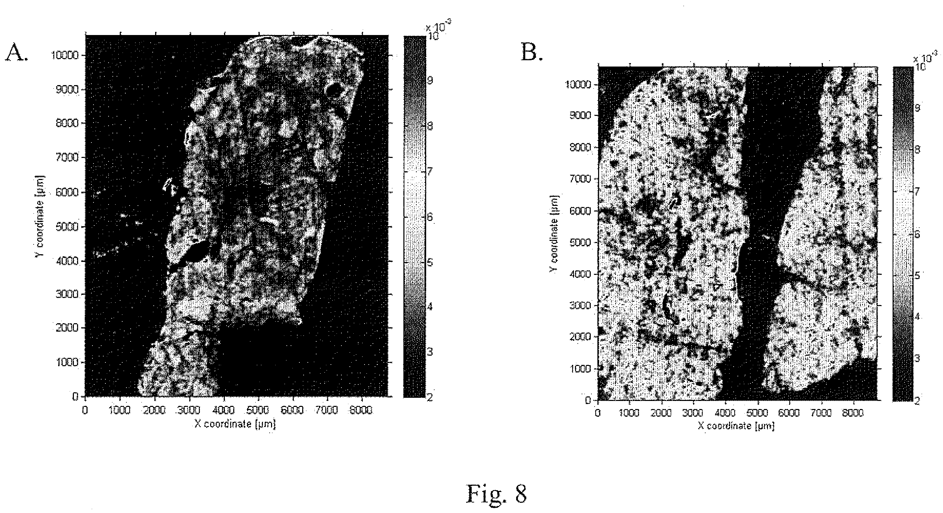

In a further example, the above samples were also measured with a QCL-based microscope. While a QCL operating in the 1500-1750 cm⁻¹ range is readily able to reproduce the above results, we here illustrate the potential, simplicity and speed of the QCL microscopy in this context. Two QCLs were tuned over a spectral range of 1027-1087 cm⁻¹ and 1167-1319 cm⁻¹, corresponding to wavelengths of 9.74 µm-9.20 µm and 8.57 µm-7.58 µm, respectively. Each laser was tuned over its respective range within 11 seconds. A microbolometer array (640x480 pixels) camera recorded transmission images during these scans each 20 ms which results in an effective spectral resolution of 4 cm⁻¹. Each scan was repeated 5 times and the transmission spectra were referenced to an empty slide. Fourfold spatial oversampling was performed. The total acquisition time amounted to 7 minutes and could be further shortened e.g. by reducing the wavenumber ranges or even measuring at fixed frequency conditions. Details of the setup are described in N. Kröger et al., in: Biomedical Vibrational Spectroscopy VI: Advances in Research and Industry, edited by A. Mahadevan-Jansen, W. Petrich, Proc. of SPIE Vol. 8939, 89390Z; N. Kröger et al.,J. Biomed. Opt. 19 (2014) 111607; and N. Kröger-Lui et al., Analyst 140 (2015) 2086). Prior to further analysis the spectra were smoothed over a spatial extend of 67µm. k-means cluster analysis was performed. While the equivalent QCL-based cluster center spectra would of course also show the distinct differences with regards to the fixation in the protein band regions analogous to Fig. 3, spectral differences are also observable in the spectral ranges of the QCLs used for illustration in this example (Fig 7): One simple example for such spectral differences is the average slope in the 1050 cm⁻¹ - 1080 cm⁻¹ spectral range. If simply this average slope is taken as a measure of the state of fixation clear differences between the unfixed and fixed sample are illustrated (Fig. 8A and Fig 8B, respectively). They may be further evaluated e.g. by a color gradient between the edges and the center of the tissue sample and/or by a histogram of the slopes. A further example is the (normalized or unnormalized) ratio (or difference or both) of the peak at 1230 cm⁻¹ and the shoulder at 1280 cm⁻¹.

In another example, an MCF7 xenograft was grown on the back of a mouse and harvested to produce a tissue sample that was subjected to room temperature 10% formalin for 2 hours before being routinely processed and embedded in paraffin. This amount of time in room temperature fixative is known to inadequately fix the tissue. The tissue block was sectioned into a 4 µm cross section, dewaxed in xylene, and dried overnight. The sample was then imaged on a hyperspectal microscope with a quantum cascade laser (QCL). The sample was imaged in transmission mode with a 2 mm x 2 mm spatial field of view, positioned of the edge of the tissue, with each pixel representing ∼4 um. The spectral absorption of the sample was then mapped at each spatial location for wavelengths between 900 and 1800 cm⁻¹ in 4 cm⁻¹ intervals.

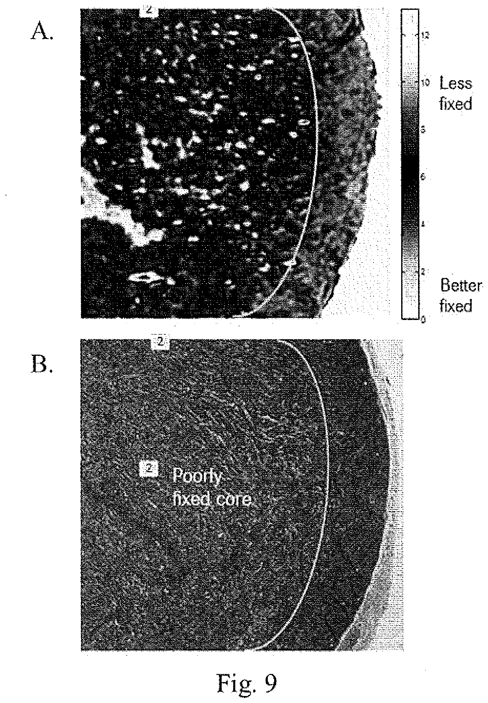

Each hypercube of mid-infrared (MID IR) transmission data was then normalized to have unit amplitude to account for transmission variations across the sample and decomposed using standard principal component analysis (PCA). With this statistical method the original wavelength data was transformed onto an arbitrary orthogonal axes that shows how much of the variance from the data is contained in each principal component in descending order. Thus the primary principal component (PC1) is the variable that contains the most variability. The magnitude of PC1 was imaged and higher PC1 values were observed throughout the center of the tissue where fixative penetration and the consequential formation of crosslinking are at a minimum. *See* Figure 9A. The sample was then stained with hematoxylin and eosin to analyze fixation-dependent morphological structure and the interior of the sample was discovered to suffer from poor fixation as indicated by the visually poor nuclear density and cracked features. *See* Figure 9B. It would thus appear that PCA can be correlated with fixation or crosslinking status.

### REFERENCES

[1] D. Chafin et al., PLOS ONE 2013, 8(1):e54138. DOI: 10.1371/journal.pone.0054138
[2] A.C.Wolff et al., Arch Pathol Lab Med 2014, 138(2): 241-256. DOI: 10.5858/arpa.2013-0953-SA
[3] J.A. Ibarra, L.W.Rogers, Am J Clin Pathol 2010, 134:594-596. DOI: 10.1309/AJCPAIJPSN4A9MJI
[4] J.D. Goldsmith et al., Am J Clin Pathol 2011, 135:484-485. DOI: 10.1309/AJCPO1ZG6FERBGZB
[5] O.L.Bohn, S.Sanchez-Sosa, Am J Clin Pathol 2011, 135:979-980. DOI: 10.1309/AJCPVRQS9UQTCZE5
[6] W. Petrich, Appl Spectrosc Rev 2001, 136:181-237. DOI: 10.1081/ASR-100106156
[7] N. Kröger et al., J Biomed Opt 2014, 19(11), 111607. DOI: 10.1117/1.jbo.19.11.111607
[8] P. Bassan et al., Analyst 2014, 139, 3856-3859. DOI: 10.1039/c4an00638k
[9] K. Yeh et al., Anal Chem 2015, 87 (1), 485-493. DOI: 10.1021/ac5027513
[10] M. Verdonck et al., Analyst 2013, 138, 4083-4091. DOI: 10.1039/c3an00246b
[11] J.T. Mason, T.J. O'Leary, J Histochem Cytochem 1991, 39(2), 225-229.
[12] D. Emeis, W. Anker, K. Wittern, Anal Chem 2007, 79:2096-2100.
[13] Freida L. Carson, Fixation and processing, American Society for Clinical Pathology Press. p. 2. http://www.cap.org/apps/docs/store/PUB123_Histologic_Sample.pdf
[14] Geoffrey Rolls, Leica Biosystems, 06. March 2012, Fixation and Fixatives (1) - The Process of Fixation and the Nature of Fixatives.
http://www.leicabiosystems.com/pathologyleaders/fixation-and-fixatives-1-the-process-of-fixation-and-the-nature-of-fixatives/
[15] Eltoum I, Fredenburgh J, Myers RB, Grizzle WE. Introduction to the theory and practice of fixation of tissues. J Histotechnol 2001;24;173 -190.
[16] Winsor L. Tissue processing. In Woods A and Ellis R eds. Laboratory histopathology. New York: Churchill Livingstone, 1994;4.2-1 - 4.2-39.
[17] Shan-Rong Shi, Antigen Retrieval Immunohistochemistry Based Research and Diagnostics, Jan 14, 2011, Wiley
[18] Neal S. Goldstein, Minimum Formalin Fixation Time for Consistent Estrogen Receptor Immunohistochemical Staining of Invasive Breast Carcinoma, 86 Am J Clin Pathol 2003;120:86-92.
[19] Helander KG., Studies on the rate of dehydration of histological specimens, J Microsc. 1987 Mar;145(Pt 3):351-5.
[20] Prentø P, Commercial formalin substitutes for histopathology. Biotechnic & histochemistry [1052-0295] yr:1997 vol:72 iss:5 pg:273 -82
[23] Mason & O'Leary, J Histochem Cytochem 1991, 39(2):225-229.

## Claims

1. An automated method of evaluating a quality state of a cellular sample, said method comprising:
(a) identifying a quality signature (221) in a mid-infrared spectroscopy spectrum (220) of the cellular sample, hereinafter referred to as a test spectrum; and
(b) applying a classification (211) or quantification (231) algorithm to the quality signature in the test spectrum to determine the quality state of the cellular sample, wherein the cellular sample is a fixed cellular sample, the quality state is a fixation state, and the quality signature is a fixation signature.

2. The method of claim 1, wherein the fixation signature in the test spectrum is correlated with the fixation state of the fixed tissue sample by determining whether a difference exists between the fixation signature in the test spectrum to a fixation signature in at least one reference mid-infrared spectrum, hereinafter referred to as at least one reference spectrum, wherein the fixed tissue sample is the fixed cellular sample.

3. The method of claim 2, wherein the at least one reference spectrum correlates with an acceptably-fixed tissue sample.

4. The method of claim 2 or claim 3, wherein the difference in the fixation signature is a change in amplitude and/or peak position between 1615 cm⁻¹ and 1640 cm⁻¹ in a second derivative spectrum.

5. The method of claim 2 or claim 3, wherein the difference in the fixation signature in a multivariate evaluation method is based on a spectral shift and/or amplitude change between 1615 cm⁻¹ and 1640 cm⁻¹.

6. The method of claim 4 or claim 5, wherein the fixed tissue sample is fixed with a cross-linking fixative.

7. The method of any of the foregoing claims, wherein the test spectrum is obtained by quantum cascade laser-based microscopy.

8. The method of claim 7, wherein the test spectrum (220) is obtained in 30 minutes or less.

9. The method of claim 7 or 8, wherein the test spectrum is obtained from a wax-embedded cellular sample prior to dewaxing or after dewaxing.

10. The method of claim 7 or 8, wherein the sample is a cryogenically frozen sample and the test spectrum is obtained either before or after thawing.

11. The method of any of claims 1-10, wherein the quality state is evaluated at a plurality of positions within one or more fields of view of the cellular sample.

12. The method of claim 11, further comprising:
(c) mapping the quality state evaluated at each of the plurality of positions within one or more fields of view of the cellular sample to a digital image of the field of view.

13. The method of claim 11 or 12, further comprising:
(d) automatically calculating total area of the field of view satisfying a predefined quality state.

14. The method according to any one of the previous claims,
wherein the fixation state is classified as under-fixed, over-fixed, or acceptably fixed, the method further comprising:
(c) performing one or more remedial tissue processes if the sample is determined to be over-fixed or under-fixed, and repeating (a)-(c) until an acceptably fixed tissue sample is obtained, wherein said remedial tissue process comprises:
(c1) additional fixation of an under-fixed tissue sample; or
(c2) rejection of an over-fixed tissue sample and obtaining a new sample; and
(d) performing a labeling process on the acceptably-fixed tissue sample.

15. A system (100) for automated analysis of cellular sample quality, said system comprising a processor (200) and memory, the memory comprising interpretable instructions which, when executed by the processor, cause the processor to perform a method comprising:
(a) executing a feature extraction function (210) to extract features (221) of a quality signature from a mid-infrared spectroscopy spectrum (220) of the cellular sample, hereinafter referred to as a test spectrum; and
(b) executing a classifier function to apply a classification (211) or quantification (231) algorithm to the features of the quality signature extracted from the test spectrum, wherein the classification or quantification algorithm calculates a confidence score indicative of the likelihood that the quality signature is indicative of one of a plurality of pre-defined quality states of the cellular sample, wherein the cellular sample is a fixed cellular sample, the quality state is a fixation state, and the quality signature is a fixation signature.

## Patentansprüche

1. Automatisiertes Verfahren zum Evaluieren eines Qualitätsstatus einer Zellprobe, wobei das Verfahren umfasst:
(a) Identifizieren einer Qualitätssignatur (221) in einem mittleren Infrarotspektroskopiespektrum (220) der Zellprobe, im Folgenden als Prüfspektrum bezeichnet; und
(b) Anwenden eines Klassifikations(211)- oder Quantitätsbestimmungs(231)-Algorithmus auf die Qualitätssignatur im Prüfspektrum, um den Qualitätsstatus der Zellprobe zu bestimmen, wobei die Zellprobe eine fixierte Zellprobe ist, der Qualitätsstatus ein Fixierungsstatus ist und die Qualitätssignatur eine Fixierungssignatur ist.

2. Verfahren nach Anspruch 1, wobei die Fixierungssignatur in dem Prüfspektrum mit dem Fixierungsstatus der fixierten Gewebeprobe korreliert wird durch Bestimmen, ob ein Unterschied zwischen der Fixierungssignatur im Prüfspektrum und einer Fixierungssignatur in mindestens einem Bezugsspektrum im mittleren Infrarotbereich, im Folgenden als mindestens ein Bezugsspektrum bezeichnet, besteht, wobei die fixierte Gewebeprobe die fixierte Zellprobe ist.

3. Verfahren nach Anspruch 2, wobei das mindestens eine Bezugsspektrum mit einer annehmbar gut fixierten Gewebeprobe korreliert.

4. Verfahren nach Anspruch 2 oder Anspruch 3, wobei der Unterschied in der Fixierungssignatur eine Änderung einer Amplitude und/oder einer Peak-Position zwischen 1615 cm⁻¹ und 1640 cm⁻¹ in einem zweiten Ableitungsspektrum ist.

5. Verfahren nach Anspruch 2 oder Anspruch 3, wobei der Unterschied in der Fixierungssignatur in einem multivariaten Auswertungsverfahren auf einer Spektralverschiebung und/oder einer Amplitudenänderung zwischen 1615 cm⁻¹ und 1640 cm⁻¹ basiert.

6. Verfahren nach Anspruch 4 oder Anspruch 5, wobei die fixierte Gewebeprobe mit einem vernetzendem Fixiermittel fixiert ist.

7. Verfahren nach einem der vorangehenden Ansprüche, wobei das Prüfspektrum durch Quantenkaskadenlaser-basierte Mikroskopie erhalten wird.

8. Verfahren nach Anspruch 7, wobei das Prüfspektrum (220) in 30 Minuten oder weniger erhalten wird.

9. Verfahren nach Anspruch 7 oder 8, wobei das Prüfspektrum aus in Wachs eingebetteten Zellproben vor dem Entwachsen oder nach dem Entwachsen erhalten wird.

10. Verfahren nach Anspruch 7 oder 8, wobei die Probe eine tiefgefrorene Probe ist und das Prüfspektrum entweder vor oder nach dem Auftauen erhalten wird.

11. Verfahren gemäß einem der Ansprüche 1-10, wobei der Qualitätsstatus an mehreren Stellen innerhalb eines oder mehrerer Sichtfelder der Zellprobe bewertet wird.

12. Verfahren nach Anspruch 11, ferner umfassend:
(c) Abbilden des an jeder der mehreren Stellen bewerteten Qualitätsstatus innerhalb eines oder mehrerer Sichtfelder der Zellprobe auf ein digitales Bild des Sichtfelds.

13. Verfahren nach Anspruch 11 oder 12, ferner umfassend:
(d) automatisch Berechnen einer Gesamtfläche des Sichtfelds, das einen vordefinierten Qualitätsstatus erfüllt.

14. Verfahren nach einem der vorangehenden Ansprüche,
wobei der Fixierungsstatus als zu schwach fixiert, zu stark fixiert oder zufriedenstellend fixiert klassifiziert wird, wobei das Verfahren ferner umfasst:
(c) Durchführen eines oder mehrerer abhelfender Gewebeprozesse, falls bestimmt wird, dass die Probe zu stark fixiert oder zu schwach fixiert ist, und Wiederholen von (a)-(c), bis eine zufriedenstellend fixierte Gewebeprobe erhalten wird, wobei der abhelfende Gewebeprozess umfasst:
(c1) zusätzliches Fixieren einer zu schwach fixierten Gewebeprobe; oder
(c2) Verwerfen einer zu stark fixierten Gewebeprobe und Beschaffen einer neuen Probe; und
(d) Durchführen eines Markierungsprozesses an der zufriedenstellend fixierten Gewebeprobe.

15. System (100) für eine automatisierte Analyse einer Zellprobenqualität, wobei das System einen Prozessor (200) und einen Speicher umfasst, wobei der Speicher interpretierbare Befehle umfasst, die bei ihrer Ausführung durch den Prozessor bewirken, dass der Prozessor ein Verfahren durchführt, das umfasst:
(a) Ausführen einer Merkmalsextraktionsfunktion (210), um Merkmale (221) einer Qualitätssignatur aus einem mittleren Infrarotspektroskopiespektrum (220) der Zellprobe zu extrahieren, im Folgenden als Prüfspektrum bezeichnet; und
(b) Ausführen einer Klassifikatorfunktion, um einen Klassifikations(211)- oder einen Quantitätsbestimmungs(231)-Algorithmus auf die Merkmale der Qualitätssignatur, die aus dem Prüfspektrum extrahiert wurden, anzuwenden, wobei der Klassifikations- oder Quantitätsbestimmungs-Algorithmus einen Konfidenz-Score berechnet, der die Wahrscheinlichkeit dafür angibt, dass die Qualitätssignatur einen von mehreren vordefinierten Qualitätsstatus der Zellprobe angibt, wobei die Zellprobe eine fixierte Zellprobe ist, der Qualitätsstatus ein Fixierungsstatus ist und die Qualitätssignatur eine Fixierungssignatur ist.

## Revendications

1. Procédé automatisé d'évaluation d'un état de qualité d'un échantillon cellulaire, ledit procédé comprenant :
(a) l'identification d'une signature de qualité (221) de l'échantillon cellulaire dans un spectre de spectroscopie dans l'infrarouge moyen (220), dénommé ci-après spectre de test ; et
(b) l'application d'un algorithme de classification (211) ou de quantification (231) à la signature de qualité dans le spectre de test afin de déterminer l'état de qualité de l'échantillon cellulaire, où l'échantillon cellulaire est un échantillon cellulaire fixé, l'état de qualité est un état de fixation, et la signature de qualité est une signature de fixation.

2. Procédé selon la revendication 1, dans lequel la signature de fixation dans le spectre de test est corrélée avec l'état de fixation de l'échantillon de tissu fixé en déterminant s'il existe une différence entre la signature de fixation dans le spectre de test et une signature de fixation dans au moins un spectre dans l'infrarouge moyen de référence, dénommé ci-après l'au moins un spectre de référence, dans lequel l'échantillon de tissu fixé est l'échantillon cellulaire fixé.

3. Procédé selon la revendication 2, dans lequel l'au moins un spectre de référence est en corrélation avec un échantillon de tissu fixé de manière acceptable.

4. Procédé selon la revendication 2 ou la revendication 3, dans lequel la différence dans la signature de fixation est une modification en amplitude et/ou de position de pic entre 1615 cm⁻¹ et 1640 cm⁻¹ dans un second spectre dérivé.

5. Procédé selon la revendication 2 ou la revendication 3, dans lequel la différence dans la signature de fixation dans un procédé d'évaluation multi variables est basée sur un décalage spectral et/ou une modification en amplitude entre 1615 cm⁻¹ et 1640 cm⁻¹.

6. Procédé selon la revendication 4 ou la revendication 5, dans lequel l'échantillon de tissu fixé est fixé avec un fixateur de réticulation.

7. Procédé selon l'une quelconque des revendications précédentes, dans lequel le spectre de test est obtenu par une microscopie basée sur un laser à cascade quantique.

8. Procédé selon la revendication 7, dans lequel le spectre de test (220) est obtenu en 30 minutes ou moins.

9. Procédé selon la revendication 7 ou la revendication 8, dans lequel le spectre de test est obtenu à partir d'un échantillon cellulaire incorporé dans de la cire avant l'enlèvement de la cire ou après l'enlèvement de la cire.

10. Procédé selon la revendication 7 ou la revendication 8, dans lequel l'échantillon est un échantillon congelé par cryogénie et le spectre de test est obtenu soit avant, soit après décongélation.

11. Procédé selon l'une quelconque des revendications 1 à 10, dans lequel l'état de qualité est évalué à une pluralité de positions dans un ou plusieurs champs de vue de l'échantillon cellulaire.

12. Procédé selon la revendication 11, comprenant en outre :
(c) la mise en correspondance de l'état de qualité évalué à chacune des positions de la pluralité dans un ou plusieurs champs de vue de l'échantillon cellulaire avec une image numérique du champ de vue.

13. Procédé selon la revendication 11 ou la revendication 12, comprenant en outre :
(d) le calcul automatique de l'aire totale du champ de vue satisfaisant un état de qualité prédéfini.

14. Procédé selon l'une quelconque des revendications précédentes,
dans lequel l'état de fixation est classé comme insuffisamment fixé, trop fixé ou fixé de manière acceptable, le procédé comprenant en outre :
(c) l'exécution d'un ou de plusieurs processus de tissu réparateur si l'échantillon est déterminé comme étant trop fixé ou insuffisamment fixé, et la répétition de
(a) à (c) jusqu'à ce qu'un échantillon de tissu fixé de manière acceptable soit obtenu, où ledit processus de tissu réparateur comprend :
(c1) une fixation supplémentaire d'un échantillon de tissu insuffisamment fixé ; ou
(c2) le rejet d'un échantillon de tissu trop fixé et l'obtention d'un nouvel échantillon ; et
(d) l'exécution d'un processus d'étiquetage sur l'échantillon de tissu fixé de manière acceptable.

15. Système (100) permettant une analyse automatisée de la qualité d'un échantillon cellulaire, ledit système comprenant un processeur (200) et une mémoire, la mémoire comprenant des instructions interprétables qui, lorsqu'elles sont exécutées par le processeur, font en sorte que le processeur exécute un procédé comprenant :
(a) l'exécution d'une fonction d'extraction de caractéristique (210) pour extraire des caractéristiques (221) d'une signature de qualité à partir d'un spectre de spectroscopie dans l'infrarouge moyen (220) de l'échantillon cellulaire, dénommé ci-après le spectre de test ; et
(b) l'exécution d'une fonction de classification pour appliquer un algorithme de classification (211) ou de quantification (231) aux caractéristiques de la signature de qualité extraite à partir du spectre de test, où l'algorithme de classification ou de quantification calcule un score de confiance indicateur de la probabilité que la signature de qualité est indicatrice de l'un des états d'une pluralité d'états de qualité prédéfinis de l'échantillon cellulaire, où l'échantillon cellulaire est un échantillon cellulaire fixé, l'état de qualité est un état de fixation, et la signature de qualité est une signature de fixation.
